Europäisches Patentamt

European Patent Office

Office européen des brevets

(11) Veröffentlichungsnummer: **0 054 292**
**B1**

(12) **EUROPÄISCHE PATENTSCHRIFT**

(45) Veröffentlichungstag der Patentschrift: **27.05.87**

(21) Anmeldenummer: **81110425.6**

(22) Anmeldetag: **14.12.81**

(51) Int. Cl.⁴: **G 01 D 5/26, G 01 J 3/42**

(54) **Faseroptische Messeinrichtung.**

(30) Priorität: **17.12.80 US 217452**

(43) Veröffentlichungstag der Anmeldung:
**23.06.82 Patentblatt 82/25**

(45) Bekanntmachung des Hinweises auf die
Patenterteilung:
**27.05.87 Patentblatt 87/22**

(84) Benannte Vertragsstaaten:
**AT CH DE FR GB IT LI NL**

(56) Entgegenhaltungen:
**DE-A-2 804 103**
**DE-A-2 905 630**
**DE-A-2 920 489**

(73) Patentinhaber: **Siemens Aktiengesellschaft**
**Berlin und München**
**Wittelsbacherplatz 2**
**D-8000 München 2 (DE)**

(72) Erfinder: **Rüll, Hartwig, Dr.**
**Balduin-Helm-Strasse 39**
**D-8080 Fürstenfeldbruck (DE)**
Erfinder: **Klement, Ekkehart, Dr.**
**Siegrunestrasse 1**
**D-8000 München19 (DE)**

Courier Press, Leamington Spa, England.

**Beschreibung**

Die Erfindung betrifft ein faseroptisches Meßgerät zum Messen eines physikalischen Parameters nach dem Oberbegriff des Patentanspruchs 1.

Meßgeräte der genannten Art gehen aus der DE—A—29 20 489 hervor. Bei diesen Meßgeräten werden zum Zuleiten des Lichts zweier Wellenlängen aus der Lichterzeugungseinrichtung zum wellenlängenselektiven Reflektor und optischen Modulator und zum Zuleiten des modulierten Lichts der einen Wellenlänge zusammen mit dem vom Reflektor reflektierten Licht der anderen Wellenlänge zur wellenlängenselektiven Strahlteilereinrichtung verschiedene faseroptische Übertragungsleitungen benutzt. Dasselbe gilt für eine aus der DE—A—29 05 630 bekanntes Meßgerät.

Aus der DE—A—28 04 103 geht eine wellenlängenselektive Strahlteilereinrichtung hervor, die zwischen einer Lichtquelle und einer faseroptischen Übertragungsleitung im Strahlengang des Lichts angeordnet ist, das der Übertragungsleitung aus der Lichtquelle zugeleitet ist. Diese Strahlteilereinrichtung ist so ausgebildet, daß sie für dieses Licht zumindest teildurchlässig ist, während sie aus dem von der Übertragungsleitung zugeleiteten Licht zwei Teile abtrennt.

Aufgabe der Erfindung ist es, eine Meßeinrichtung der eingangs genanntent Art anzugeben, die einfacher und kompakter aufgebaut ist.

Diese Aufgabe wird bei einer Vorrichtung des eingangs genannten Art durch die im kennzeichnenden Teil des Patentanspruchs 1 angegebenen Merkmale gelöst.

Ein besonderer Vorteil des erfindungsgemäßen faseroptischen Meßgerätes liegt darin, daß es nur eine einzige faseroptische Übertragungsleitung benötigt. Dieser Vorteil trägt zusammen mit der Tatsache, daß die Strahlteilereinrichtung im Strahlengang des von der Lichterzeugungseinrichtung des von der Lichterzeugungseinrichtung zugeführten Lichts angeordnet ist, wesentlich zum einfachen und kompakten Aufbau bei. Darüberhinaus läßt sich die Strahlteilereinrichtung in einem integrierten Aufbau und damit äußerst raumsparend realisieren.

Mit der erfindungsgemäßen Meßeinrichtung können auch mehrere Parameter gemessen werden, insbesondere in der Ausgestaltung nach den Ansprüchen 4 und 5 Druck und Temperatur. Sie kompensiert Meßfehler, die durch Effekte erzeugt werden, die Verluste in der Übertragungsleitung, beispielsweise Biegeverluste, erzeugen. Durch Änderungen der optischen Eigenschaften der Übertragungsleitung verursachte Einwirkungen auf die Messung werden weitgehend eliminiert.

Die erfindungsgemäß Meßeinrichtung kann leicht einjustiert werden und es sind keine aufwendigen optomechanischen Komponenten erforderlich.

Ein erfindungsgemäßes Meßgerät erzeugt von der Meßseite über die faseroptische Übertragungsleitung zur Auswertungsseite übertragene Signale, die vergleichsweise hohe Intensitäten aufweisen.

Die einzige faseroptische Übertragungsleitung kann auch aus nur einer einzigen Faser bestehen.

Auf der Meßseite eines erfindungsgemäßen Meßgerätes werden keine Hilfsenergiequellen zur Kompensation von Umgebungseinflüssigen benötigt.

Bei einer in Anspruch 6 angegebenen bevorzugten Ausführungsform eines erfindungsgemäßen Meßgeräts ist das Ausgangssignal aus der Signalverarbeitungseinrichtung unabhängig von der Intensität der Lichterzeugungseinrichtung, insbesondere der ersten und zweiten Lichtquelle gemäß Anspruch 8.

Ein erfindungsgemäßes Meßgerät kann vorzugsweise in der Industrie, beispielsweise in der chemischen Industrie oder in Kraftwerken verwendet werden. Es kann auch bevorzugt in einem Kraftfahrzeug verwendet werden, in dem verschiedene Funktionen überwacht werden müssen.

Bevorzugte Ausführungsformen der Erfindung sind in den Figuren dargestellt und werden in der folgenden Beschreibung näher erläutert. Von den Figuren zeigen:

Figur 1 eine erste Ausführungsform eines erfindungsgemäßen faseroptischen Meßgeräts,

Figur 2 eine schematische Darstellung eines konventionellen Sensors, der in der Ausführungsform nach Figur 1 als optischer Modulator verwendet werden kann, und

Figur 3 eine zweite Ausführungsform eine erfindungsgemäßen Meßgeräts, bei dem eine Wellenleitertechnologie verwendet ist.

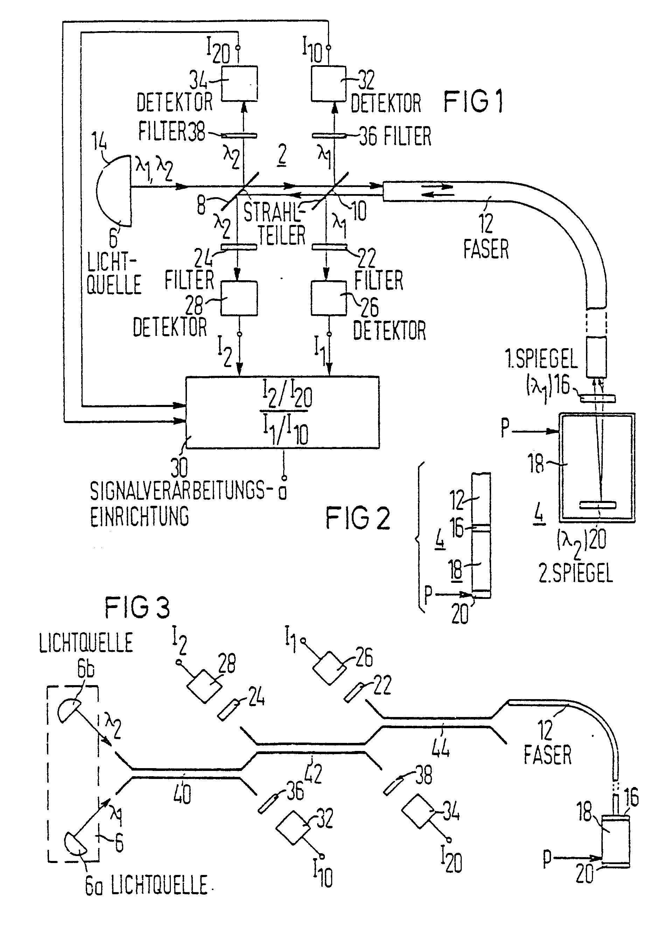

Gemäß Figur 1 weist das faseroptische Meßgerät eine Auswertungsseite 2 und eine Meßseite 4 auf. Auf der Auswertungsseite 2 befindet sich eine Lichtquelle 6. Die Lichtquelle 6 erzeugt einen ersten Lichtstrahl, einer Lichtwellenlänge $\lambda_2$. Die Lichtquelle 6 erzeugt auch einen zweiten Lichtstrahl einer anderen Lichtwellenlänge $\lambda_1$. Beide Lichtstrahlen werden über zwei Strahlteiler 8 und 10 einem ersten Ende einer faseroptischen Übertragungsleitung 12 oder eines entsprechenden Kabels zugeführt und dort in die Leitung oder das Kabel eingekoppelt.

Die Lichtquelle 6 ist geeignet auszuwählen. Sie kann eine Fokussierungseinrichtung enthalten, die durch die runde Rückseite 14 angedeutet ist. Die Lichtquelle 6 kann beispielsweise zwei Licht emittierende Dioden (LED) oder Laser enthalten, deren Lichtstrahlen durch ein Spiegelsystem zusammengeführt werden. Beide Lichtemitter können gleichzeitig angeregt und betrieben werden.

Wie schon erwähnt, werden der erste und zweite Lichtstrahl dem ersten Ende der Übertragungsleitung 12 zugeleitet. Es können dabei zusätzliche Zuleitungseinrichtungen, beispielsweise Linsen oder Spiegel oder einfach ein die Lichtquelle 6 schützendes und umgebendes Rohr vorgesehen sein. Die beiden von der Lichtquelle 6 erzeugten Lichstrahlen werden vom Eingangsende der Übertragungsleitung 12 zu deren Ausgangsende übertragen. Auf der Meßseite 4 der faseroptischen Übertragungsleitung 12 befindet sich ein erster Spiegel 16. Der erste Spiegel kann eine auf der Endfläche der Faser 12 ausgebildete dünne reflektierende Schicht sein. Der erste Spiegel 16 kann aber auch eine getrennte Einheit sein, wie es in der Figur 1 dargestellt ist. Er reflektiert im wesentlichen nur Licht der anderen Wellenlänge $\lambda_1$. Es wird deshalb zumindest ein großer Anteil des übertragenen zweiten Lichtstrahls zum Eingangsende der Übertragungsleitung 12 zurückreflektiert. Von dort wird dieser Anteil zur Auswertungsseite 2 übertragen. Der erste Spiegel 16 ist auch so gewählt, daß zumindest ein großer Anteil des übertragenen zweiten Lichstrahls durch ihn hindurchgeht. Dieser Anteil wird von einem optischen Modulator 18 empfangen.

Der optische Modulator 18 ist auf der Meßseite 4 angeordnet und dient zur Messung eines physikalischen Parameters p. Er ist so ausgelegt, daß er die Intensität des eintretenden Lichstrahls entsprechend dem physikalischen Parameter p oder in Abhängigkeit davon verändert. Der optische Modulator 18 ist so konstruiert, daß er einen Teil des ankommenden ersten Lichtstrahls in das Ausgangsende der Faser 12 zurückreflektiert. Dieser zurückreflektierte Teil des ersten Lichtstrahls wird dadurch vom Ausgangsende zum Eingangsende der Übertragungsleitung 12 übertragen.

In der in Figur 1 dargestellten Ausführungsform ist ein bekannter optischen Modulator 18 vorgesehen, der an einem Ende einen zweiten Spiegel 20 aufweist. Eine Änderung des Parameters p kann eine Aonderung der Position des Spiegels 20 verursachen. Der Spiegel 20 kann beispielsweise ein Schwingspiegel oder vibrierender Spiegel sein. Der zweite Spiegel 20 ist so gewählt, daß er in erster Linie oder nur Licht der einen Wellenlänge $\lambda_2$ reflektiert. Die Intensität des reflektierten Lichts wird entsprechend den Änderungen des physikalischen Parameters p moduliert. Dieser Parameter p kann beispielsweise ein Druck oder eine Temperatur sein. Er kann auch eine andere, in einem Kraftfahrzeug gemessene Größe sein.

In einer nicht dargestellten anderen Ausführungsform kann der erste Lichtstrahl den optischen Modulator 18 durchstrahlen. Er kann dann beispielsweise durch eine faseroptische Einrichtung und/oder ein Spiegelsystem zum Ausgangsende der faseroptischen Ubertragungsleitung 12 zurückgeführt werden.

Es sei darauf hingewiesen, daß in der Ausführungsform nach Figur 1 beide von den Spiegeln 16 und 20 reflektierten Lichtstrahlen wieder dem zweiten Ende oder Ausgangsende derselben faseroptischen Übertragungsleitung 12 zugeleitet werden. Beide reflektierten Lichtkomponenten werden über die Übertragungsleitung 12 zur Auswertungsseite 2 übertragen.

Auf der Auswertungsseite 2 wird das zurückkehrende Licht durch eine wellenlängen selektive Strahlteilereinrichtung, welche die beiden wellenlängenselektiven Strahlteiler 8 und 10 enthält, in Teilstrahlen mit den Wellenlängen $\lambda_2$ bzw. $\lambda_1$ aufgespalten, d.h. die Strahlteiler 8 und 10 trennen das vom ersten Spiegel 16 reflektierte Licht von dem vom zweiten Spiegel 20 reflektierten Licht. Es kann jede andere herkommliche wellenlängenselektive Strahlteilereinrichtung verwendet werden. Beide Strahlen können dann Schmalbandfilter 22 bzw. 24 durchstrahlen. Diese Schmalbandfilter 22 und 24 lassen nur Licht der Wellenlänge $\lambda_1$ bzw. $\lambda_2$ durch Daraufhin trifft ein im wesentlichen nur die andere Wellenlänge enthaltender Lichtanteil auf einen ersten optischen Detektor 26, der ein erstes elektrisches Ausgangssignal $I_1$ liefert, das proportional zur auftreffenden Lichtintensität ist. Ein im wesentlichen nur die eine Wellenlänge $\lambda_2$ enthaltender Lichtanteil trifft auf einen zweiten optischen Detektor 28, der diesen Anteil in ein zweites elektrisches Ausgangssignal $I_2$ umwandelt. Dieses zweite elektrische Ausgangssignal $I_2$ ist proportional zur Lichtintensität dieses Lichtanteils.

Das erste elektrische Signal $I_1$ und das zweite elektrische Signal $I_2$ werden einer Signalverarbeitungseinrichtung 30 zugeführt, die das Verhältnis $I_2/I_1$ dieser Signale bildet. Diese Verarbeitungseinrichtung 30 kann auch eine Einrichtung zur Bildung des logarithmischen Verhältnisses $I_2/I_1$ oder eines Logerithmus dieses Verhältnisses aufweisen. Die Einrichtung 30 kann auc einen nicht dargestellten Verstärker aufweisen. An einem Ausgang kann ein Ausgangssignal a erhalten werden. Dieses Signal ist proportional zum Verhältnis $I_2/I_1$ bzw. zu $\log (I_2/I_1)$.

Die vom ersten Spiegel 16 reflektierte Lichtkomponente trägt alles Rauschen oder alle Störungen, die von der faseroptischen Übertragungsleitung 12 erzeugt werden. Diese Störungen können durch Verbeigen der faseroptischen Leitung 12 oder durch andere intensitätsreduzierende Effekte verursacht werden. Die vom zweiten Spiegel 20 reflektierte Lichtkomponente enthält Information über den zu messenden physikalischen Parameter p und zusätzlich das Rauschen oder Störungen, die durch intensitätsreduzierende Verluste in der Übertragungsleitung 12 verursacht werden.

Durch die Division des zweiten Signals $I_2$ durch das erste Signal $I_1$ wird der Einfluß der Störeffekte kompensiert oder weitgehend eliminert.

Es ist vorteilhaft, gemäß Figur 1 zwei zusätzliche Signale $I_{10}$ und $I_{20}$ zu erzeugen und diese zusätzlichen Signale in die Signalverarbeitungseinrichtung 30 einzugeben. Gemäß Figur 1 durchstrahlt der zweite Lichtstrahl der Lichtquelle 6 den Strahlteiler 8 und wird vom Strahlteiler 10 teilweise reflektiert. Der reflektierte Lichtanteil wird einem dritten optischen Detektor 32 zugeführt. Gemaß Figur 1 wird der erste Lichtstrahl vom Strahlteiler 8 teilweise reflektiert. Der reflektierte Lichtanteil wird einem vierten optischen Detektor 34 zugeführt.

Der dritte Detektor 32 ist Teil einer Einrichtung zur Erzeugung eines dritten elektrischen Signals $I_{10}$, das der Intensität des zweiten Lichtstrahls mit der anderen Wellenlänge $\lambda_1$ entspricht. Der vierte Detektor 34 ist Teil einer Einrichtung zur Erzeugung eines vierten, elektrischen Signals $I_{20}$, das der Intensität des ersten Lichstrahls mit der einen

Wellenlänge $\lambda_2$ entspricht. Der dritte optische Detektor 32 wandelt folglich einen Anteil des zweiten Lichstrahls in das dritte elektrische Signal $I_{10}$ um. Der vierte optische Detektor 34 wandelt in entsprechender Weise einen Anteil des ersten Lichstrahls in das vierte elektrische Signal $I_{20}$ um. In den zu den Detektoren 32 und 34 führenden Lichstrahlengängen können Schmalbandfilter 36 und 38 angeordnet sein.

Das dritte und vierte elektrische Signal $I_{10}$ und $I_{20}$ werden der Signalverarbeitungseinrichtung 30 zugeführt. Die Signalverarbeitungseinrichtung 30 bildet das Ausgangssignal a entsprechend dem Verhältnis einer zweiten und ersten relativen Intensität. Die erste relative Intensität $I_1/I_{10}$ wird durch das Verhältnis zwischen dem ersten elektrischen Signal $I_1$ und dem dritten elektrischen Signal $I_{10}$ gebildet und die zweite relative Intensität $I_2/I_{20}$ wird durch das Verhältnis zwischen dem zweiten elektrischen Signal $I_2$ und dem vierten elektrischen Signal $I_{20}$ gebildet. Die erste relative Intensität $I_1/I_{10}$ ist unabhängig von der Ausgabe aus der Lichtquelle 6, die den ersten Lichtstrahl mit der Wellenlänge $\lambda_1$ abstrahlt, und die zweite relative Intensität $I_2/I_{20}$ ist unabhängig von der Ausgabe oder Abstrahlung der Lichtquelle 6, die den zweiten Lichtstrahl mit der zweiten Wellenlänge $\lambda_2$ abstrahlt. Das Ausgangssignal a ist dementsprechend proportional dem Verhältnis $(I_2/I_{20})/(I_1/I_{10})$. Aus diesem Ausgangssignal a sind Intensitätsänderungen in den Lichtquellen eliminert.

Es sei darauf hingewiesen, daß in einer anderen, nicht dargestellten Ausführungsform die Einrichtungen zur Erzeugung des dritten und vierten elektrischen Signals $I_{10}$ bzw. $I_{20}$ einfach aus einem Abgriff an den elektrischen Versorgungsspannungen der einzelnen Lichtquellen sein, wenn eine Lichtquelle 6 mit zwei individuellen Lichtquellen benutzt wird. Diese Abgriffe können den Strom oder die Spannung der einzelnen Lichtquelle repräsentieren.

Es gibt faseroptische Meßkonzepte, die polarisierende Elemente, wie beispielsweise einen Einkristall, polarisierende Folien oder Film usw. benötigen. Es ist manchmal schwierig, solche Elemente auf einefache Weise in einem faseroptischen Sensor zu integrieren. Wo derartige polarisierende Elemente oder Polarisatoren erforderlich sind, können bekannte polarisierende Fasern als faseroptische Übertragungsleitung 12 verwendet werden. Auf diese Weise kann räumlichen oder volumenmäßigen Anforderungen entsprochen werden.

Die Figur 2 zeigt, daß ein optische Modulator 18 aus irgendeinem der verschiedenen herkömmlichen Konzepte auf der Meßseite 4 benutzt werden kann. Der optische Modulator 18 in Figur 2 enthält einen ersten Spiegel 16, der zwischen dem Sensor 18 und der Übertragungsleitung 12 angeordnet ist und diesen beiden Elementen direkt benachbart ist. In dieser Ausführungsform wirkt der physikalische Parameter p direkt auf den zweiten Spiegel 20 ein.

In der Figur 3 ist eine faseroptische Meßvorrichtung dargestellt, die eine Wellenleitertechnologie verwendet. Die Vorteile eines solchen Systems sind: Es ist klein, billig, robust, stabil und es arbeitet ohne optische Linsen. In der Figur 3 bezeichnen die mit Bezugzeichen der Figur 1 übereinstimmenden Bezugszeichen die gleichen Elemente und Komponenten.

Wie aus der Figur 3 hervorgeht, werden drei Wellenleiterkoppler 40, 42, und 44 bekannter Art verwendet. Die Lichtquelle 6 enthält hier zwei einzelne Lichtquellen 6a und 6b zum Abstrahlen von Licht der anderen Wellenlänge $\lambda_1$ bzw. zum Abstrahlen von Licht der einen Wellenlänge $\lambda_2$. Das Licht dieser Lichtquellen 6a und 6b wird jeweils in eines der beiden linken Enden des Wellenleiter kopplers 40 eingekoppelt. Die beiden rechten Enden des Wellenleiter kopplers 40 sind auf den dritten Detektor 32 bzw. auf ein erstes linkes Ende des zweiten Wellenleiterkopplers 42 gerichtet. Mit dem zweiten linken Ende des zweiten Wellenleiterkopplers 42 ist der zweite Detektor 28 optisch verbunden. Mit dem zweiten rechten Ende des zweiten Detektors 42 ist der vierte Detektor 34 optisch verbunden und mit dem zweiten rechten Ende dieses Kopplers ist ein erstes linkes Ende des dritten Wellenleiterkopplers 44 verbunden. Das zweite linke Ende dieses Wellenleiterkopplers 44 ist der erste Detektor 26 optisch verbunden. Ein erstes rechtes Ende dieses Kopplers kann ein offenes Ende sein. Das zweite rechte Ende dieses Kopplers ist mit dem ersten Ende oder Eingabeende der faseroptischen Übertragungsleiting 12 optisch verbunden. Die Wellenleiterkoppler können aus optischen Richtkopplern bestehen.

Die Arbeitsweise der in Figur 3 dargestellten faseroptischen Meßvorrichtung ist die gleich, wie jene der Vorrichtung gemäß Figur 1. Die beiden Lichtstrahlen mit den Wellenlängen $\lambda_1$ und $\lambda_2$ werden über die drei Wellenleiterkoppler 40, 42, 44 in das erste Ende oder Eingabeende der optischen Übertragungsleitung 12 eingekoppelt. Licht, das aus der Übertragungsleitung 12 zurückkommt, wird aus den zweiten linken Enden oder Ausgabeenden der Wellenleiterkoppler 44 und 42 ausgekoppelt und dem ersten bzw. zweiten Detektor 26 bzw. 28 zugeführt. Das Licht aus den beiden einzelnen Lichtquellen 6a und 6b wird von dem dritten und vierten Detektor 32 bzw. 34 empfangen, und zwar über die ersten rechten Enden der Koppler 40 bzw. 42. In der Ausführungsform nach Figur 3 werden Strahlteiler 8 und 10, wie sie aus der Figur 1 hervorgehen, nicht benötigt.

**Patentansprüche**

1. Faseroptisches Meßgerät zum Messen eines physikalischen Parameters (p),
wobei Licht zweier Wellenlängen ($\lambda_1$, $\lambda_2$) aus einer Lichterzeugungseinrichtung (6) durch eine faseroptische Übertragungsleitung (12) einem wellenlängenselektiven Reflektor (16) zugeleitet ist, der für eine Wellenlänge ($\lambda_2$) durchlässig ist, die andere ($\lambda_1$) aber reflektiert, wobei das vom Reflektor (16) durgelassene Licht der einen Wel-

lenlänge ($\lambda_2$) einem vom Parameter (p) beeinflußten optischen Modulator (18) zugeleitet ist, der dieses Licht in Abhängigkeit vom Parameter (p) moduliert und weitergibt,

wobei das weitergegebene modulierte Licht der einen Wellenlänge ($\lambda_2$) zusammen mit dem vom Reflektor (16) reflektierten Licht der anderen Wellenlänge ($\lambda_1$) einer wellenlängenselektiven Strahlteilereinrichtung (10, 8; 44, 42) zugeleitet ist, die vom zugeleiteten Licht der beiden Wellenlängen ($\lambda_1$, $\lambda_2$) einen im wesentlichen nur die eine Wellenlänge ($\lambda_1$) enthaltenden Teil abtrennt, der einem ersten optoelektrischen Detektor (26) zugeleitet ist, während das Licht mit im wesentlichen der anderen Wellenlänge ($\lambda_2$) einem zweiten optoelektrischen Detektor (28) zugeleitet ist, und

wobei elektrische Ausgangssignale ($I_1$, $I_2$) der beiden Detektoren (26, 28) einer Signalverarbeitungseinrichtung (30) zugeleitet sind, die ein Verhältnis zwischen diesen Signalen ($I_1$, $I_2$) bildet,

dadurch gekennzeichnet, daß die wellenlängeselektive Strahlteilereinrichtung (10, 8; 44, 42) zwischen der Lichterzeugungseinrichtung (6) und der faseroptischen Übertragungsleitung (12) im Strahlengang des Lichts zweier Wellenlängen ($\lambda_1$, $\lambda_2$) angeordnet ist, das aus der Lichterzeugungseinrichtung (6) durch diese Übertragungsleitung (12) dem Reflektor (16) zugeleitet ist, und

daß das vom optischen Modulator (18) weitergegebene modulierte Licht der einen Wellenlänge ($\lambda_2$) zusammen mit dem am Reflektor (16) reflektierten Licht der anderen Wellenlänge ($\lambda_1$) durch diese Übertragungsleitung (12) der Strahlteilereinrichtung (10, 8, 24; 44, 42) zugeleitet ist.

2. Gerät nach Anspruch 1, dadurch gekennzeichnet, daß der optische Modulator (18) einen zweiten Reflektor (20) aufweist, der die eine Wellenlänge ($\lambda_2$) zur faseroptischen Übertragungsleitung (12) zurückreflektiert.

3. Gerät nach Anspruch 2, dadurch gekennzeichnet, daß die Position des zweiten Reflektors (20) in Abhängigkeit von dem zu messenden physikalischen Parameter (p) veränderbar ist.

4. Gerät nach einem der vorhergehenden Ansprüche, dadurch gekennzeichnet, daß der optische Modulator (18) einen Temperatursensor aufweist.

5. Gerät nach einem der vorhergehenden Ansprüche, dadurch gekennzeichnet, daß der optische Modulator (18) einen Drucksensor aufweist.

6. Gerät nach einem der vorhergehenden Ansprüche, dadurch gekennzeichnet, daß im Strahlengang des von der Lichterzeugungseinrichtung (6) abgestrahlten Lichts der beiden Wellenlängen ($\lambda_1$, $\lambda_2$) eine wellenlängenselektiven Strahlteilereinrichtung (8, 10; 40, 42) angeordnet ist, die von diesem Licht einen im wesentlichen nur die andere Wellenlänge ($\lambda_1$) enthaltenden und einem dritten optoelektrischen Detektor (32) zugeleiteten Teil sowie einen im wesentlichen nur die eine Wellenlänge ($\lambda_2$) enthaltenden und einem vierten optoelektrischen Detektor (34) zugeleiteten Teil abtrennt, und

daß elektrische Ausgangssignale ($I_{10}$, $I_{20}$) des dritten und vierten Detektors (32, 34) zusammen mit den Ausgangssignalen ($I_1$, $I_2$) des ersten und zweiten Detektors (26, 28) einer Signalverarbeitungseinrichtung (30) zugeleitet sind, die ein zu einem bestimmten Verhältnis ($I_2/I_{20}/I_1/I_{10}$) zwischen diesen Ausgangssignalen ($I_1$, $I_2$, $I_{10}$, $I_{20}$) proportionales Ausgangssignal (a) bildet.

7. Gerät nach Anspruch 6, dadurch gekennzeichnet, daß zwischen der Lichterzeugungseinrichtung (6) und der Übertragungsfaser (12) zwei wellenlängenselektive Strahlteiler (8, 10) hintereinander im Strahlengang sowohl des von der Lichterzeugungseinrichtung (6) abgestrahlten Lichts der beiden Wellenlängen ($\lambda_1$, $\lambda_2$) als auch des aus der Übertragungsleitung an deren Eingangsende austretenden Lichts schräg zur Achse dieser Strahlengänge angeordnet sind, von denen einer für die eine Wellenlänge ($\lambda_2$) durchlässig und für die andere Wellenlänge ($\lambda_1$) teildurchlässig ist, der andere dagegen für die andere Wellenlänge ($\lambda_1$) durchlässig und für die eine Wellenlänge ($\lambda_2$) teildurchlässig ist, und die gemeinsam die den beiden Strahlengängen zugeordneten Strahlteilereinrichtungen bilden.

8. Gerät nach einem der vorhergehenden Ansprüche, dadurch gekennzeichnet, daß die Lichterzeugungseinrichtung (6) zwei getrennte Lichtquellen (6a, 6b) enthält, von denen eine (6b) die eine Wellenlänge ($\lambda_2$) und die andere (6a) die andere Wellenlänge ($\lambda_1$) abstrahlt.

9. Gerät nach einem der vorhergehenden Ansprüche, dadurch gekennzeichnet, daß die faseroptische Übertragungsleitung (12) eine polarisierende optische Faser aufweist.

10. Gerät nach einem der vorhergehenden Ansprüche, dadurch gekennzeichnet, daß eine fokussierende Einrichtung (44) vorgesehen ist, die das von der Lichterzeugungseinrichtung (6) abgestrahlte Licht der beiden Wellenlängen ($\lambda_1$, $\lambda_2$) auf ein Eingangsende der Übertragungsleitung (12) fokussiert.

11. Gerät nach Anspruch 7, dadurch gekennzeichnet, daß das Licht aus den beiden Lichtquellen (6a, 6b) über wenigstens einen Wellenleiterkoppler (40, 42, 44) dem Eingangsende der Übertragungsleitung (12) zugeleitet ist.

12. Gerät nach einem der vorhergehenden Ansprüche, dadurch gekennzeichnet, daß wenigstens zwei Wellenleiterkoppler (44, 42) zum Auskoppeln des vom optischen Modulator (18) und dem Reflektor (16) zurückkehrenden Lichts aus dem Eingangsende der Übertragungsleitung (12) vorgesehen sind.

## Revendications

1. Appareil de mesure à fibre optique servant à la mesure d'un paramètre physique (p),

dans lequel une lumière possédant deux longueurs d'onde ($\lambda_1$, $\lambda_2$) est envoyée à partir d'un dispositif (6) de production d'une lumière, par l'intermédiaire d'une ligne de transmission (12) formée d'une fibre optique à un réflecteur (16) sélectif pour les longueurs d'onde et qui est transparent pour une première longueur d'onde

($\lambda_2$), mais réfléchit la seconde longueur d'onde ($\lambda_1$), et

dans lequel la lumière transmise par le réflecteur (16) et possédant la première longueur d'onde ($\lambda_2$) est envoyée à un modulateur optique (18) influencé par le paramètre (p) et qui module cette lumière en fonction de ce paramètre (p) et la retransmet, et

dans lequel la lumière modulée retransmise, possédant la première longueur d'onde ($\lambda_2$) est envoyée, ainsi que la lumière réfléchie par le réflecteur (16) et possédant la seconde longueur d'onde ($\lambda_1$), à un dispositif diviseur de rayonnement (10, 8; 42, 44) sélectif du point de vue des longueurs d'onde, qui sépare, de la lumière envoyée possédant les deux longueurs d'onde ($\lambda_1$, $\lambda_2$) une partie contenant essentiellement uniquement la première longueur d'onde ($\lambda_1$) et qui est envoyée à un premier détecteur optoélectrique (26), tandis que la lumière possédant essentiellement la seconde longueur d'onde ($\lambda_2$) est envoyée à un second détecteur optoélectrique (28), et dans lequel des signaux de sortie électriques ($I_1$, $I_2$) des deux détecteurs (26, 28) sont envoyés à un dispositif (30) de traitement des signaux, qui forme un rapport entre ces signaux ($I_1$, $I_2$), caractérisé en ce

que le dispositif diviseur de rayonnement (10, 8; 44, 42) sélectif du point de vue des longueurs d'onde est disposée entre le dispositif (6) de production de la lumière et la ligne de transmission (12) en forme de fibre optique, sur le trajet de propagation de la lumière possédant les deux longueurs d'onde ($\lambda_1$, $\lambda_2$) qui est envoyée depuis le dispositif (6) de production de la lumière au réflecteur (16) par l'intermédiaire de cette ligne de transmission (12), et

que la lumière modulée possédant la première longueur d'onde ($\lambda_2$) est retransmise par le modulateur optique (18) est envoyée, en même temps que la lumière possédant la seconde longueur d'onde ($\lambda_1$) est réfléchie sur le réflecteur (16) au dispositif diviseur de rayonnement (10, 8, 24; 44, 42), par l'intermédiaire de cette ligne de transmission (12).

2. Appareil suivant la revendication 1, caractérisé par le fait que le modulateur optique (18) comporte un second réflecteur (20) qui renvoie par réflexion la première longueur d'onde ($\lambda_2$) en direction de la ligne de transmission (12) formée d'une fibre optique.

3. Appareil suivant la revendication 2, caractérisé par le fait que la position du second réflecteur (20) est modifiable en fonction du paramètre physique (p) devant être mesuré.

4. Appareil suivant l'une des revendications précédentes, caractérisé par le fait que le modulateur optique (18) comporte un capteur de température.

5. Appareil suivant l'une des revendications précédentes, caractérisé par le fait que le modulateur optique (18) comporte un capteur de pression.

6. Appareil suivant l'une des revendications précédentes, caractérisé par le fait que sur le trajet de propagation de la lumière émise par le dispositif (6) de production de la lumière et possédant les deux longueurs d'onde ($\lambda_1$, $\lambda_2$) se trouve disposé un dispositif diviseur de rayonnement (8, 10; 40, 42) sélectif du point de vue des longueurs d'onde et qui sépare, de cette lumière, une partie contenant essentiellement uniquement la seconde longueur d'onde ($\lambda_1$) et envoyée à un troisième détecteur optoélectrique (32) ainsi qu'une partie contenant essentiellement uniquement la première longueur d'onde ($\lambda_2$) et envoyée à un quatrième détecteur optoélectrique (34), et que des signaux de sortie électriques ($I_{10}$, $I_{20}$) du troisième et du quatrième détecteurs (32, 34) sont envoyés, ainsi que les signaux de sortie ($I_1$, $I_2$) du premier et du second détecteurs (26, 28) à un dispositif de traitement de signaux (30), qui forme un signal de sortie (a) proportionnel à un rapport déterminé ($I_2/I_{20}/I_1/I_{10}$) entre ces signaux de sortie ($I_1$, $I_2$, $I_{10}$, $I_{20}$).

7. Appareil suivant la revendication 6, caractérisé par le fait qu'entre le dispositif (6) de production de la lumière et la fibre de transmission (12) deux diviseurs de rayonnement (8, 10) sélectifs du point de vue des longueurs d'onde sont disposés l'un derrière l'autre sur le trajet de propagation aussi bien de la lumière émise par le dispositif (6) de production de la lumière et possédant les deux longueurs d'onde ($\lambda_1$, $\lambda_2$) que de la lumière sortant de la ligne de transmission au niveau de l'extrémité d'entrée de cette dernière, en étant situés obliquement par rapport à l'axe de ces trajets de propagation, que l'un d'eux est passant pour la première longueur d'onde ($\lambda_2$) et partiellement passant pour la seconde longueur d'onde ($\lambda_1$), tandis que l'autre est passant pour la seconde longueur d'onde ($\lambda_1$) et est partiellement passant pour la première longueur d'onde ($\lambda_2$), et qu'ils forment en commun les dispositifs de division de rayonnement associés aux deux trajets de propagation du rayonnement.

8. Appareil suivant l'une des revendications précédentes, caractérisé par le fait que le dispositif (6) de protection de la lumière contient deux sources de lumière séparées (6a, 6b), dont l'une (6b) émet la première longueur d'onde ($\lambda_2$) et dont l'autre (6a) émet la seconde longueur d'onde ($\lambda_1$).

9. Appareil suivant l'une des revendications précédentes, caractérisé par le fait que la ligne de transmission (12) formée d'une fibre optique comporte une fibre optique produisant une polarisation.

10. Appareil suivant l'une des revendications précédentes, caractérisé par le fait qu'il est prévu un dispositif de focalisation (44) qui focalise la lumière émise par le dispositif (6) de production de lumière et possédant les deux longueurs d'onde ($\lambda_1$, $\lambda_2$), sur une extrémité d'entrée de la ligne de transmission (12).

11. Appareil suivant la revendication 7, caractérisé par le fait que la lumière sortant des deux sources de lumière (6a, 6b) est envoyée, par l'intermédiaire d'au moins un coupleur de guides d'ondes (40, 42, 44) à l'extrémité d'entrée de la ligne de transmission (12).

12. Appareil suivant l'une des revendications précédentes, caractérisé par le fait qu'il est prévu au moins deux coupleurs de guides d'ondes (44, 42) servant à réaliser le découplage de la lumière qui est renvoyée par le modulateur optique (18) et le reflecteur (16) et sort de l'extrémité d'entrée de la ligne de transmission (12).

**Claims**

1. Fibre-optical measuring apparatus for measuring a physical parameter (p), wherein light of two wavelengths $(\lambda_1, \lambda_2)$ from a light source (6) is supplied via a fibre-optic transmission line (12) to a wavelength-selective reflector (16) which is permeable to one wavelength $(\lambda_2)$, but reflects the other $(\lambda_1)$, wherein the light of the one wavelength $(\lambda_2)$ transmitted by the reflector (16) is supplied to an optical modulator (18) which is influenced by the parameter (p) and which modulates the light in dependence upon the parameter (p) and transmits it, wherein the transmitted modulated light of the one wavelength $(\lambda_2)$ is supplied together with the reflected light of the other wavelength $(\lambda_1)$ reflected by the reflector (16) to a wavelength-selective beam splitter (10, 8; 44, 42) which divides a component essentially comprising the one wavelength $(\lambda_1)$ only from the supplied light of the two wavelengths $(\lambda_1, \lambda_2)$, which component is supplied to a first opto-electrical detector (26), whereas the light essentially of the other wavelength $(\lambda_2)$ only is supplied to a second opto-electrical detector, and where electrical output signals $(l_1, l_2)$ of the two detectors (26, 28) are fed to a signal-processing device (30) which establishes the relationship between the signals $(l_1, l_2)$, characterised in that the wavelength-selective beam splitter (10, 8; 44, 42) between the light source (6) and the fibre-optic transmission line (12) is arranged in the light path of the light of two wavelengths $(\lambda_1, \lambda_2)$ from the light source (6) which is supplied to the reflector (16) via the transmission line (12), and that the modulated light of the one wavelength $(\lambda_2)$ transmitted by the optical modulator (18) is supplied to the beam splitter (10, 8; 44, 42) via the transmission line (12) together with the light of the other wavelength $(\lambda_1)$ reflected at the reflector (16).

2. Apparatus as claimed in Claim 1, characterised in that the optical modulator (18) has a second reflector (20) which reflects the one wavelength $(\lambda_2)$ back to the fibre-optic transmission line (12).

3. Apparatus as claimed in Claim 2, characterised in that the position of the second reflector (20) is modifiable in dependence upon the physical parameter (p) to be measured.

4. Apparatus as claimed in any one of the preceding claims, characterised in that the optical modulator (18) has a temperature sensor.

5. Apparatus as claimed in one of the preceding claims, characterised in that the optical modulator (18) has a pressure sensor.

6. Apparatus as claimed in one of the preceding claims, characterised in that there is arranged in the light path of the light of the two wavelengths $(\lambda_1, \lambda_2)$, which is irradiated by the light source (6), a wavelength-selective beam splitter (8, 10, 40, 42) which divides from the light a component that essentially comprises the other wavelength $(\lambda_1)$ only, and is supplied to a third optoelectrical detector (32), and a component which essentially comprises the one wavelength $(\lambda_2)$ only is supplied to a fourth opto-electrical detector (34), and that electrical output signals $(l_{10}, l_{20})$ of the third and fourth detector (32, 34) together with the output signals $(l_1, l_2)$ of the first and second detector (26, 28) are supplied to a signal-processing device (30) which forms an output signal (a) proportional to a specific ratio $(l_2/l_{10}/l_1/l_{10})$ between said output signals $(l_1, l_2, l_{10}, l_{20})$.

7. Apparatus as claimed in Claim 6, characterised in that two wavelength-selective beam splitters (8, 10) are sequentially arranged between the light source (6) and the transmission fibre (12) in the light path both of the light of the two wavelengths $(\lambda_1, \lambda_2)$ irradiated from the light source (6), and also of the light emerging from the transmission line at the input end thereof, so as to be transverse to the axis of said light paths, of which beam splitters one is permeable to the one wavelength $(\lambda_2)$ and partially permeable to the other wavelength $(\lambda_1)$, whereas the other is permeable to the other wavelength $(\lambda_1)$ and partially permeable to the one wavelength $(\lambda_2)$, and which commonly form the beam splitters assigned to the two light paths.

8. Apparatus as claimed in one of the preceding claims, characterised in that the light source (6) comprises two separate sources (6a, 6b) one (6b) of which produces the one wavelength $(\lambda_2)$ and the other (6a) produces the other wavelength $(\lambda_1)$.

9. Apparatus as claimed in one of the preceding claims, characterised in that the fibre-optical transmission line (12) has a polarizing optical fibre.

10. Apparatus as claimed in one of the preceding claims, characterised in that a focussing device (44) is arranged to focus the light of the two wavelengths $(\lambda_1, \lambda_2)$ produced by the light source (6) onto an input end of the transmission line (12).

11. Apparatus as claimed in Claim 7, characterised in that the light from two sources (6a, 6b) is transmitted to the input end of the transmission line (12) by at least one waveguide coupler (40, 42, 44).

12. Apparatus as claimed in one of the preceding claims, characterised in that there are provided at least two waveguide couplers (44, 42) for coupling out the light from the input end of the transmission line (12) returning from the optical modulator (18) and the reflector (16).

FIG 1

FIG 2

FIG 3